# EUROPÄISCHE PATENTSCHRIFT

(11) **EP 3 245 103 B1**
(45) Veröffentlichungstag und Bekanntmachung des Hinweises auf die Patenterteilung: **13.11.2019**
(21) Anmeldenummer: 16701407.5
(22) Anmeldetag: 11.01.2016
(51) Int. Cl.: B60R 11/02, H04M 1/02

(54) **KRAFTFAHRZEUG MIT EINER ELEKTRONISCHEN AUFNAHMEEINHEIT EINES TRAGBAREN KOMMUNIKATIONSENDGERÄTES UND VERFAHREN**
MOTOR VEHICLE WITH AN ELECTRONIC RECEPTACLE UNIT OF A PORTABLE COMMUNICATION TERMINAL AND A METHOD
VÉHICULE AUTOMOBILE AVEC UNITÉ D'ACCUEIL D'UN TERMINAL DE COMMUNICATION PORTABLE ET PROCÉDÉ

(30) Priorität: 13.01.2015 DE 102015000398
(43) Veröffentlichungstag der Anmeldung: 22.11.2017
(73) Patentinhaber: Audi AG, 85045 Ingolstadt (DE)
(72) Erfinder: LOTTES, Daniel, 93309 Kelheim (DE)
(86) Internationale Anmeldenummer: PCT/EP2016/000032
(87) Internationale Veröffentlichungsnummer: WO 2016/113125

(56) Entgegenhaltungen:
- EP-A2- 2 103 476
- DE-A1- 10 147 300
- DE-A1-102004 035 871
- DE-A1-102009 025 433
- DE-A1-102009 032 622
- US-A1- 2011 230 178
- US-A1- 2014 004 902
- US-A1- 2014 194 169

## Beschreibung

Die Erfindung betrifft ein Kraftfahrzeug mit einer Bordelektronik und einer mit der Bordelektronik elektrisch verbundenen fahrzeuginternen elektronischen Aufnahmeeinheit für ein tragbares Kommunikationsendgerät. Zudem betrifft die Erfindung ein Verfahren zum Bereitstellen von Information in einem Kraftfahrzeug mit einer Bordelektronik, wobei von dem Kraftfahrzeug eine mit der Bordelektronik elektrisch verbundene fahrzeuginterne elektronische Aufnahmeeinheit für ein tragbares Kommunikationsendgerät umfasst wird.

Kraftfahrzeuge mit einer Bordelektronik und einer mit der Bordelektronik elektrisch verbundenen fahrzeuginternen elektronischen Aufnahmeeinheit für ein tragbares Kommunikationsendgerät sind aus dem Stand der Technik bekannt. So ist in der DE 10 2012 014 855 A1 ein Kraftfahrzeug beschrieben, welches eine Halteeinrichtung aufweist, an der eine elektronische, mobile Ein- und Ausgabeeinheit lösbar befestigt werden kann. Bei der Ein- und Ausgabeeinheit handelt es sich besonders bevorzugt um ein Smartphone.

Die US 2011/0230178 A1 bildet den nächstliegenden Stand der Technik.

Es ist Aufgabe der Erfindung, ein Kraftfahrzeug mit einer fahrzeuginternen elektronischen Aufnahmeeinheit für ein tragbares Kommunikationsendgerät bereitzustellen, mit welcher das Kommunikationsendgerät vielfältig und variantenreich aufgenommen werden kann. Es ist auch Aufgabe ein Verfahren mit einer derartigen Aufnahmeeinheit zum Bereitstellen von Informationen in dem Kraftfahrzeug bereitzustellen.

Diese Aufgabe wird erfindungsgemäß durch ein Kraftfahrzeug sowie durch ein Verfahren mit den Merkmalen gemäß den jeweiligen unabhängigen Ansprüchen gelöst.

Ein erfindungsgemäßes Kraftfahrzeug mit einer Bordelektronik und einer mit der Bordelektronik elektrisch verbundenen fahrzeuginternen elektronischen Aufnahmeeinheit dient zur Aufnahme für ein tragbares Kommunikationsendgerät. Ein wesentlicher Gedanke der Erfindung ist darin zu sehen, dass die Aufnahmeeinheit zumindest einen separaten Aufnahmeplatz aufweist, welcher zur individuellen Aufnahme eines reversibel von dem Kommunikationsendgerät separierbaren und wieder anbringbaren Funktionsmoduls in von dem Kommunikationsendgerät separierten Zustand ausgebildet ist. Wobei das Funktionsmodul insbesondere nur eine für sich gegenständlich ausgebildete Teileinheit bzw. Untereinheit, die insbesondere unabhängig von zumindest einer zweiten Teileinheit handhabbar und von dem Kommunikationsendgerät reversibel abnehmbar und anbringbar ist, des Kommunikationsendgeräts darstellt. Der Aufnahmeplatz ist zur elektronischen Kopplung des separierten Funktionsmoduls mit der Bordelektronik zur Durchführung der bestimmungsgemäßen Funktion, insbesondere nur, des Funktionsmoduls ausgebildet.

Durch die Aufnahmeeinheit mit dem zumindest einen Aufnahmeplatz wird es möglich, Teile des Kommunikationsendgeräts in Form der Funktionsmodule individuell und variantenreich aufzunehmen.

Insbesondere ist also vorgesehen, dass das Kommunikationsendgerät aus verschiedenen Funktionsmodulen modulartig bzw. baukastenartig aufgebaut ist und dadurch individuell gestaltet werden kann. So kann das Kommunikationsendgerät beispielsweise als Mobiltelefon, insbesondere als Smartphone, ausgebildet sein. Das Funktionsmodul kann beispielsweise als ein Bildschirm, insbesondere als ein berührungsempfindlicher Bildschirm, und/oder eine Kamera und/oder ein Speichermodul und/oder eine Tastatur und/oder ein Akku und/oder ein Lautsprecher und/oder eine Funkschnittstelle ausgebildet sein. Vorzugsweise weist das Kommunikationsendgerät ein Endoskelett auf, an welchem sich die einzelnen Funktionsmodule anbringen lassen. Die Funktionsmodule sind daher jeweils für sich eigene gegenständliche Einheiten, die am Kommunikationsendgerät angebracht oder abgenommen werden können und in anderer Kombination mit anderen Funktionsmodulen zu einer alternativen Ausgestaltung eines Kommunikationsendgeräts zerstörungsfrei reversibel wieder zusammenfügbar sind. Die Funktionsmodule sind daher bewusst und definiert als zerstörungsfrei lösbare und wieder anbringbare Komponenten gestaltet, die in verschiedenen Modulkombinationen ihre bestimmungsgemäße, originäre Funktion bereitstellen.

Es ist vorgesehen, dass die Funktionsmodule von dem Kommunikationsendgerät separiert werden können und unabhängig voneinander durch den zumindest einen separaten Aufnahmeplatz der Aufnahmeeinheit aufgenommen werden können, um mit der Bordelektronik des Kraftfahrzeugs elektronisch verbunden zu werden. Insbesondere ist vorgesehen, dass das in dem zumindest einen Aufnahmeplatz aufgenommene Funktionsmodul seine bestimmungsgemäße Funktion ausführen kann. Das bedeutet beispielsweise, dass ein Akku des Kommunikationsendgeräts geladen werden kann und/oder zur Energiespeisung des Kraftfahrzeugs genutzt werden kann. Weiterhin kann ein Display des Kommunikationsendgeräts beispielsweise genutzt werden, um eine Information des Kraftfahrzeugs visuell für den Nutzer des Kraftfahrzeugs auszugeben und/oder ein berührungsempfindliches Display bzw. ein berührungsempfindlicher Bildschirm des Kommunikationsendgeräts kann beispielsweise genutzt werden, um einem Nutzer des Kraftfahrzeugs eine Bedienmöglichkeit des Kraftfahrzeugs bereitzustellen und das Eingeben von Informationen zu ermöglichen. Ergänzend oder alternativ kann beispielsweise eine Funkschnittstelle des Kommunikationsendgeräts, beispielsweise ein Bluetoothmodul und/oder ein WiFi-Modul und/oder ein NFC-Modul (Near Field Communication), in dem zumindest einen separaten Aufnahmeplatz angeordnet werden, um dem Kraftfahrzeug eine derartige Kommunikationsschnittstelle bzw. Funkschnittstelle zur Verfügung zu stellen. Das Kraftfahrzeug kann also durch die Aufnahmeeinheit mit dem zumindest einen separaten Aufnahmeplatz hinsichtlich bestimmter Funktionen, welche von den Funktionsmodulen des Kommunikationsendgeräts bereitgestellt werden, aufgerüstet werden. So kann das Kraftfahrzeug beispielsweise einfach auf einem neuesten technischen Stand gehalten werden. Zudem kann eine Funktion des Funktionsmoduls sowohl in dem Kraftfahrzeug als auch an dem Kommunikationsendgerät genutzt werden. Somit kann durch den insbesondere universellen separaten Aufnahmeplatz eine Möglichkeit bereitgestellt werden, um bereits vorhandene Hardwarekomponenten in Form der Funktionsmodule für das Kraftfahrzeug zu nutzen.

Vorzugsweise ist es vorgesehen, dass das Funktionsmodul von dem Kommunikationsendgerät und/oder von der Aufnahmeeinheit in einem laufenden Betrieb bzw. einem "Hot-Swapping-Modus" separiert und angebracht werden kann. Das bedeutet, dass die Funktionsweise von anderen Funktionsmodulen durch das Separieren oder Anbringen des Funktionsmoduls an dem Kommunikationsendgerät und/oder der Aufnahmeeinheit nicht zu einer Funktionsunterbrechung der anderen Funktionsmodule führt. Dies kann beispielsweise gewährleistet werden, indem von dem Kommunikationsendgerät, beispielsweise von einem Endoskelett des Kommunikationsendgeräts, und/oder von der Aufnahmeeinheit ein Prozessor und/oder ein Energiespeicher umfasst ist.

Erfindungsgemäß ist vorgesehen, dass die Aufnahmeeinheit mehrere separate Aufnahmeplätze aufweist. Insbesondere ist die Aufnahmeeinheit zum Aufnehmen mehrerer verschiedener separierter Funktionsmodule des Kommunikationsendgeräts in den Aufnahmeplätzen ausgebildet. Somit kann beispielsweise das Kommunikationsendgerät in alle zugehörigen Funktionsmodule, durch welche eine Gesamtfunktionalität des Kommunikationsendgeräts bereitgestellt wird, zerlegt werden und die Funktionsmodule können durch die separaten Aufnahmeplätze aufgenommen werden. Jedes der Funktionsmodule kann somit in dem jeweiligen Aufnahmeplatz mit seiner bestimmungsgemäßen Funktion betrieben werden. Die separaten Aufnahmeplätze können beispielsweise in verschiedenen Größen und/oder mit verschieden angeordneten Kontaktierungsmöglichkeiten ausgebildet sein. So können die Funktionsmodule beispielsweise in verschiedenen, vorzugsweise nach einem Baukastenprinzip, Größen vorliegen. Die Größen der Funktionsmodule sind vorzugsweise so vorgesehen, dass mehrere Funktionsmodule auf einem Endoskelett des Kommunikationsendgeräts angebracht werden können und der Abschluss eines randseitig auf dem Endoskelett angebrachten Funktionsmoduls bündig mit dem Endoskelett bzw. einer Trägerplatte des Kommunikationsendgeräts abschließt.

Vorzugsweise ist vorgesehen, dass das Funktionsmodul als ein reversibel separierbarer Bildschirm und/oder als eine reversibel separierbare Tastatur und/oder als eine reversibel separierbare Kamera ausgebildet ist. Das Funktionsmodul kann aber beispielsweise auch als Speichermodul und/oder als Energiespeicher, beispielsweise als Akku, und/oder als Lautsprecher und/oder als Blutdruckmesser und/oder als Wärmebildkamera ausgebildet sein. Eine Größe des Funktionsmoduls ist vorzugsweise durch die Fläche, welche von dem Funktionsmodul auf dem Endoskelett bzw. der Trägerplatte eingenommen wird, vorgegeben, während eine Tiefe bzw. eine Dicke der Funktionsmodule vielfältig vorliegen kann. So kann die reversibel separierbare Kamera beispielsweise durch eine Kamera mit einem größeren Objektiv ausgetauscht werden. Der Vorteil ist also, dass die Funktionsmodule vielfältig und variantenreich ausgebildet sein können, um dem Nutzer der Funktionsmodule einen individuellen Fokus auf bestimmte Funktionalitäten richten zu lassen. So kann ein Nutzer beispielsweise Wert auf einen großen Bildschirm legen. Der große Bildschirm kann dann von dem Kommunikationsendgerät separiert werden und in dem Kraftfahrzeug durch den Aufnahmeplatz aufgenommen werden, um dort die bestimmungsgemäße Funktion bereitzustellen.

In einer weiteren Ausführungsform kann es vorgesehen sein, dass mehrere Aufnahmeplätze der Aufnahmeeinheit an unterschiedlichen und an beabstandeten Stellen in einem Innenraum des Kraftfahrzeugs angeordnet sind. Die Aufnahmeplätze in dem Kraftfahrzeug sind vorzugsweise so angeordnet, dass der bestimmungsgemäße Einsatz des Funktionsmoduls in dem Aufnahmeplatz maximiert ist. So kann der Aufnahmeplatz für eine Kamera als das Funktionsmodul beispielsweise an einem Innenspiegel des Kraftfahrzeugs und/oder an einem Dachhimmel des Kraftfahrzeugs vorgesehen sein, so dass die Kamera zur Fahrzeuginnenraumüberwachung und/oder zur Fahrzeuginsassenüberwachung geeignet angeordnet ist. Die Kamera bzw. das Kameramodul kann somit beispielsweise auch ein Bild bereitstellen, welches genutzt wird, um einen Fahrzeuginsassen zu erkennen und eine Authentifizierung des Fahrzeuginsassen durchzuführen. Durch die Authentifizierung kann beispielsweise eine Personalisierung des Kraftfahrzeugs erfolgen. Es kann so beispielsweise automatisch eine Einstellung des Kraftfahrzeugs, welche personenbezogen und individuell gespeichert ist, vorgenommen werden.

In einer weiteren Ausführungsform kann es vorgesehen sein, dass das Funktionsmodul mit einer Mensch-Maschine-Schnittstelle des Kraftfahrzeugs bedienbar ist. So kann die Bedienung des Funktionsmoduls mit der Mensch-Maschine-Schnittstelle des Kraftfahrzeugs, also beispielsweise einem Sprachbefehl und/oder einem Knopfdruck eines kraftfahrzeugeigenen Bedienelements durchgeführt werden. So kann die Kamera als das Funktionsmodul beispielsweise durch einen Knopfdruck eines Knopfes eines Multifunktionslenkrads des Kraftfahrzeugs ausgelöst werden. Vorteilhaft ist also, dass die Funktionsmodule mit der schon vorhandenen Mensch-Maschine-Schnittstelle des Kraftfahrzeugs bedient werden können.

Insbesondere ist vorgesehen, dass die Funktionsmodule als Module eines bezüglich der Funktionsmodule modulartig aufgebauten und als Mobilfunkendgerät ausgebildeten Kommunikationsendgeräts ausgebildet sind. Vorzugsweise sind die Funktionsmodule separat und extern zum Mobilfunkendgerät zum bestimmungsgemäßen Funktionseinsatz verwendbar. Das Mobilfunkendgerät ist beispielsweise als Smartphone ausgebildet und die Module können in ergänzender Kombination eine volle Funktionsfähigkeit eines Smartphones bereitstellen. Modulartig bedeutet aber auch, dass die Funktionalität eines Moduls unabhängig von einem anderen Modul bereitgestellt werden kann. So kann die Kamera des Kommunikationsendgeräts beispielsweise voll funktionsfähig ohne ein Kommunikationsmodul des Kommunikationsendgeräts bereitgestellt werden. Durch die Funktionsmodule, welche als Module ausgebildet sind, kann das Mobilfunkendgerät vielfältig, individuell und variantenreich mit persönlichen Schwerpunkten gestaltet werden.

Weiterhin ist es vorzugsweise vorgesehen, dass der Aufnahmeplatz zumindest einen Magneten umfasst, durch welchen das Funktionsmodul reversibel an dem Aufnahmeplatz anbringbar ist. Durch den Magneten kann das Funktionsmodul zuverlässig und passgenau an dem Aufnahmeplatz angebracht werden. Weiterhin ermöglicht der Magnet, dass das Funktionsmodul vielfach von dem Aufnahmeplatz separiert bzw. entfernt werden kann, ohne dass wesentliche Abnutzungserscheinungen an dem Aufnahmeplatz funktionsbeeinträchtigend für das Funktionsmodul wirken können. Das Funktionsmodul kann zerstörungsfrei separiert werden.

In einer weiteren Ausführungsform kann es vorgesehen sein, dass die Aufnahmeeinheit eine Abdeckung umfasst, welche dazu ausgebildet ist, die Aufnahmeeinheit zu einem Innenraum des Kraftfahrzeugs hin gerichtet sichtgeschützt abzudecken. Die Abdeckung ist also so ausgerichtet, dass ein Nutzer des Kraftfahrzeugs bei normaler Sitzposition auf die Abdeckung blickt und die hinter der Abdeckung angeordnete Aufnahmeeinheit für den Nutzer im Wesentlichen verdeckt ist. Die Abdeckung kann beispielsweise verstellt werden, um die Aufnahmeeinheit nur teilweise oder gar nicht zu verdecken. Durch die Abdeckung kann das Funktionsmodul und/oder die Aufnahmeeinheit vor Verschmutzung, beispielsweise Staub, geschützt werden. Zudem erscheint beispielsweise eine Mittelkonsole mit der durch die Abdeckung verdeckte Aufnahmeeinheit übersichtlicher und die Sicherheit des Kraftfahrzeugs kann erhöht werden.

In einer weiteren Ausführungsform kann es vorgesehen sein, dass die Aufnahmeeinheit als ein Endoskelett ausgebildet ist und eine Auswerteeinheit umfasst, welche für eine Nutzung des angebrachten Funktionsmoduls ausgelegt ist. So kann die Aufnahmeeinheit beispielsweise das Endoskelett umfassen, welches einem Endoskelett des Kommunikationsendgeräts entspricht. Somit lässt sich das Anbringen der Funktionsmodule effektiv gestalten. Weiterhin kann die Aufnahmeeinheit die Auswerteeinheit umfassen, um damit eine Schnittstelle für die Nutzung des angebrachten Funktionsmodus bereitzustellen. So kann durch die Auswerteeinheit beispielsweise eine Firmware des jeweiligen Funktionsmoduls bereitgestellt werden, um einen Zugriff des Kraftfahrzeugs auf das Funktionsmodul und anders herum zu ermöglichen. Die Auswerteeinheit kann aber ebenso separat von der Aufnahmeeinheit in dem Kraftfahrzeug angeordnet sein und/oder durch zumindest Teile einer weiteren Auswerteeinheit des Kraftfahrzeugs umfasst werden.

Bei einem erfindungsgemäßen Verfahren wird in einem Kraftfahrzeug mit einer Bordelektronik Information bereitgestellt. Von dem Kraftfahrzeug wird eine mit der Bordelektronik elektrisch verbundene fahrzeuginterne elektronische Aufnahmeeinheit für ein tragbares Kommunikationsendgerät umfasst. Ein wesentlicher Gedanke der Erfindung ist, dass ein Funktionsmodul eines Kommunikationsendgeräts von dem Kommunikationsendgerät zerstörungsfrei separiert wird und an einen separaten Aufnahmeplatz der Aufnahmeeinheit angeordnet wird, und das Funktionsmodul in dem in dem Aufnahmeplatz aufgenommenen Zustand mit der Bordelektronik zur Durchführung der bestimmungsgemäßen Funktion des Funktionsmoduls elektrisch gekoppelt wird, wobei die Aufnahmeeinheit mehrere separate Aufnahmeplätze aufweist, und insbesondere verschiedene separierte Funktionsmodule des Kommunikationsendgerätes in den Aufnahmeplätzen aufnimmt. Die Funktionsmodule sind jeweils für sich eigene gegenständliche Einheiten, die am Kommunikationsendgerät angebracht oder abgenommen werden können und in anderer Kombination mit anderen Funktionsmodulen zu einer alternativen Ausgestaltung des Kommunikationsendgerätes zerstörungsfrei reversibel wieder zusammenfügbar sind.

Durch das Verfahren wird es also möglich, das Funktionsmodul des Kommunikationsendgeräts, insbesondere eines Mobilfunkendgeräts, reversibel zu separieren und mittels des Aufnahmeplatzes individuell und reversibel in dem Kraftfahrzeug anzuordnen. Durch das Anordnen des Funktionsmoduls in dem Aufnahmeplatz wird das Funktionsmodul elektrisch mit der Bordelektronik des Kraftfahrzeugs verbunden. Somit wird dem Kraftfahrzeug die Funktionalität des Funktionsmoduls zur Verfügung gestellt und dem Funktionsmodul wird die Funktionalität des Kraftfahrzeugs zur Verfügung gestellt. Das Funktionsmodul wird somit beispielsweise mit einem Bussystem, beispielsweise einem CAN-Bus und/oder einem Flexray-Bus, des Kraftfahrzeugs verbunden.

Weitere Merkmale der Erfindung ergeben sich aus den Ansprüchen, den Figuren und der Figurenbeschreibung.

Ausführungsbeispiele der Erfindung werden nachfolgend anhand schematischer Zeichnungen näher erläutert.

Dabei zeigen:
- Fig. 1: in schematischer Draufsicht ein Ausführungsbeispiel eines erfindungsgemäßen Kraftfahrzeugs mit einer Aufnahmeeinheit für ein tragbares Kommunikationsendgerät;
- Fig. 2: eine schematische Darstellung des tragbaren Kommunikationsendgeräts mit verschiedenen separierbaren Funktionsmodulen; und
- Fig. 3: eine schematische Darstellung eines Cockpits des Kraftfahrzeugs mit der Aufnahmeeinheit.

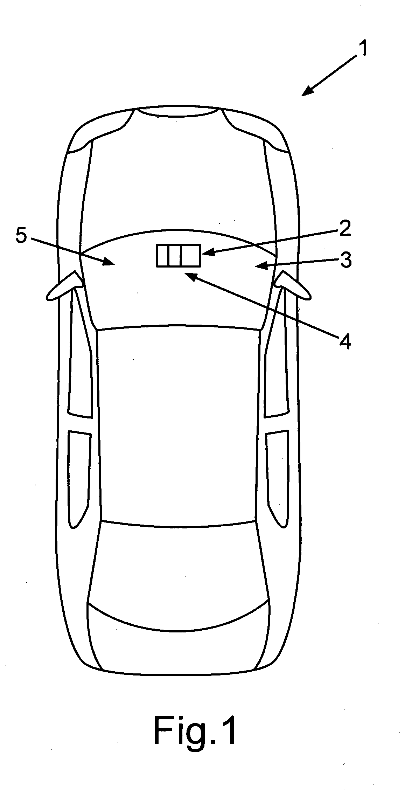

In Fig. 1 ist schematisch eine Draufsicht auf ein Kraftfahrzeug 1 mit einer fahrzeuginternen elektronischen Aufnahmeeinheit 2 gemäß einer Ausführungsform der Erfindung dargestellt. Die Aufnahmeeinheit 2 ist gemäß dem Ausführungsbeispiel in einem Innenraum 3 des Kraftfahrzeugs 1 angeordnet. Beispielsweise kann die Aufnahmeeinheit 2 an einer Mittelkonsole 4 eines Cockpits 5 des Kraftfahrzeugs 1 angeordnet werden. Die Aufnahmeeinheit 2 ist mit einer Bordelektronik des Kraftfahrzeugs 1 elektronisch verbunden. Die Anordnung der Aufnahmeeinheit 2 ist jedoch vielfältig in dem Innenraum 3 des Kraftfahrzeugs 1 möglich. Vorzugsweise allerdings so, dass eine Funktionalität eines in der Aufnahmeeinheit 2 angeordneten Funktionsmoduls zum bestimmungsgemäßen Funktionseinsatz verwendbar ist.

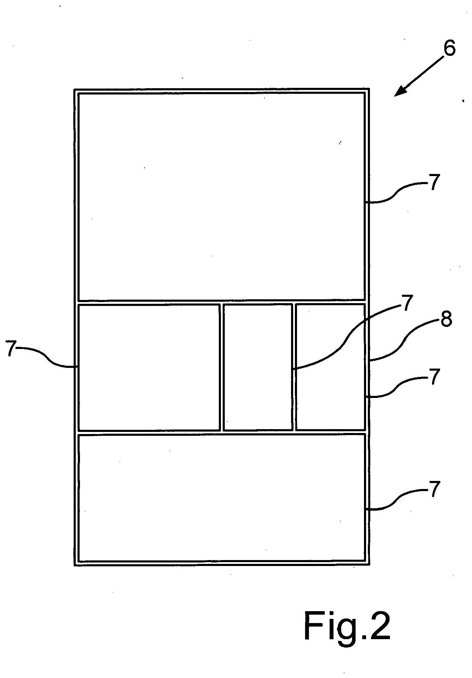

Fig. 2 zeigt ein Kommunikationsendgerät 6, welches separierbare und wieder anbringbare Funktionsmodule 7 aufweist. So sind die Funktionsmodule 7 gemäß dem Ausführungsbeispiel an einem Endoskelett 8 des Kommunikationsendgeräts angebracht. Das Endoskelett 8 kann beispielsweise als eine Trägerplatte mit Magneten zur Befestigung der Funktionsmodule 7 ausgebildet sein. Das Funktionsmodul 7 kann beispielsweise als ein Bildschirm und/oder eine Tastatur und/oder eine Kamera und/oder ein Speichermodul und/oder ein Kommunikationsmodul ausgebildet sein. Durch die Funktionsmodule 7 kann in Kombination eine volle Funktionsfähigkeit des Kommunikationsendgeräts 6 bereitgestellt werden. So ist beispielsweise eine Kamera insbesondere in Verbindung mit einem Speicher effektiv einsetzbar.

Insbesondere ist die Anordnung der Funktionsmodule 7 auf dem Endoskelett 8 vielfältig möglich, vorzugsweise so, dass ein Rand des Endoskeletts 8 bündig mit einem Rand des jeweiligen Funktionsmoduls 7 abschließt. Eine Größe des Funktionsmoduls 7 kann beispielsweise durch rasterartige einheitliche Abstandseinheiten des Endoskeletts 8 vorgegeben sein. So kann das Endoskelett 8 beispielsweise eine vorbestimmte Anzahl von Längeneinheiten und Breiteneinheiten aufweisen. Die verschiedenen Funktionsmodule 7 beanspruchen dann eine bestimmte Anzahl von Längeneinheiten und Breiteneinheiten. So kann beispielsweise ein größerer Bildschirm auf das Endoskelett 8 angebracht werden, wenn dafür eine kleinere Kamera verwendet wird. Der Tausch der Funktionsmodule 7 ist also vielfältig möglich, vorzugsweise allerdings so, dass die gesamte Anzahl der zur Verwendung beabsichtigen Funktionsmodule 7 vorzugsweise lückenfrei, also unmittelbar anschließend auf dem Endoskelett 8 des Kommunikationsendgeräts 6 angeordnet werden können. Vorzugsweise kann eine Tiefe der Funktionsmodule 7 frei gewählt werden. So kann beispielsweise die Kamera als das Funktionsmodul 7 gegen eine andere Kamera mit einem tieferen Objektiv ersetzt werden.

Die Funktionsmodule 7 können also nur von dem Endoskelett 8 separiert werden und durch die Aufnahmeeinheit 2 an dem Kraftfahrzeug 1 angebracht werden.

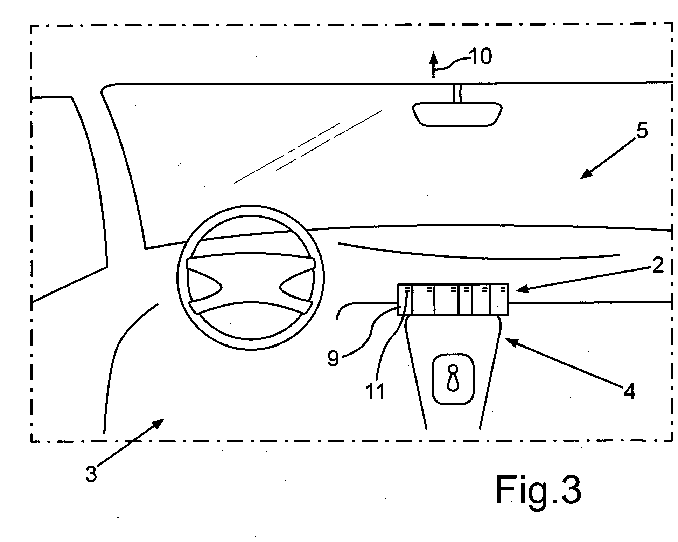

Fig. 3 zeigt die Aufnahmeeinheit 2 in dem Innenraum 3. Die Aufnahmeeinheit ist gemäß dem Ausführungsbeispiel im Bereich der Mittelkonsole 4 angeordnet. Die Anordnung der Aufnahmeeinheit 2 ist jedoch vielfältig möglicht, vorzugsweise allerdings so, dass die bestimmungsgemäße Funktion des Funktionsmoduls 7 ausgeführt werden kann.

Die Aufnahmeeinheit 2 und die Aufnahmeplätze 9 sind gemäß dem Ausführungsbeispiel benachbart und in einer Reihe senkrecht zu einer Fahrzeughochachse 10 des Kraftfahrzeugs 1 angeordnet. Jeder der separaten Aufnahmeplätze 9 ist zur individuellen Aufnahme einer der reversibel von dem Kommunikationsendgerät 6 separierbaren und wieder anbringbaren Funktionsmodulen 7 im von dem Kommunikationsendgerät 6 separierten Zustand ausgebildet. Durch das Aufnehmen des Funktionsmoduls 7 durch den Aufnahmeplatz 9 wird insbesondere eine elektronische Kopplung des Funktionsmoduls 7 mit der Bordelektronik des Kraftfahrzeugs 1 hergestellt. Vorzugsweise kann nach der Kopplung die bestimmungsgemäße Funktion des Funktionsmoduls 7 durchgeführt werden.

So kann das Funktionsmodul 7 beispielsweise als ein Akku und/oder als ein Display bzw. ein Bildschirm und/oder eine Tastatur und/oder ein Speichermodul und/oder eine Kamera und/oder ein Kommunikationsmodul ausgebildet sein. Der Akku kann beispielsweise nach der Aufnahme durch den Aufnahmeplatz 9 mittels der Bordelektronik geladen werden. Der Bildschirm kann beispielsweise genutzt werden, um eine Information von dem Kraftfahrzeug 1, insbesondere visuell, an den Nutzer des Kraftfahrzeugs 1 auszugeben. Ergänzend oder alternativ kann der Nutzer des Kraftfahrzeugs 1 über einen berührungsempfindlichen Bildschirm auch eine das Kraftfahrzeug 1 steuernde Eingabe vornehmen. Die steuernde Eingabe kann beispielsweise auch über die in dem Aufnahmeplatz 9 aufgenommene Tastatur erfolgen. Weiterhin kann beispielsweise mit der in dem Aufnahmeplatz 9 aufgenommenen Kamera der Innenraum 3 überwacht werden. Durch die in dem Aufnahmeplatz 9 angeordnete Kamera kann aber beispielsweise auch eine Authentifizierung von Personen in dem Innenraum 3 des Kraftfahrzeugs 1 erfolgen. So kann beispielsweise überprüft werden, ob die Person in dem Innenraum 3 berechtigt ist, das Kraftfahrzeug 1 zu führen. Ergänzend oder alternativ kann durch die Kamera in dem Aufnahmeplatz 9 auch eine Personalisierung von Einstellungen des Kraftfahrzeugs 1 vorgenommen werden. So kann beispielsweise anhand eines Bilds der Kamera in dem Aufnahmeraum 9, insbesondere mittels einer Auswerteeinheit des Kraftfahrzeugs 1, festgestellt werden, welcher individuelle Nutzer des Kraftfahrzeugs 1 sich gerade an welcher Position in dem Kraftfahrzeug 1 befindet. Eine Einstellung eines Sitzes des Kraftfahrzeugs 1 und/oder eines Fahrerassistenzsystems und/oder eine Lautstärke einer Audioausgabe kann beispielsweise dann aufgrund des erkannten Nutzers individuell an diesen angepasst werden. Die Einstellungen des Kraftfahrzeugs 1 können beispielsweise in einer Datenbank des Kraftfahrzeugs 1 für das individuelle Anpassen vorgehalten werden.

Verfahrensgemäß kann die Anwendung der Aufnahmeeinheit 2 wie folgt ablaufen. Der Nutzer des Kraftfahrzeugs 1 betritt das Kraftfahrzeug 1 mit seinem Kommunikationsendgerät 6. Das Kommunikationsendgerät 6 ist, wie bereits in Fig. 2 beschrieben, insbesondere ein modulartig aufgebautes Mobilfunkendgerät. Nun kann der Nutzer von dem Kommunikationsendgerät 6 einzelne Funktionsmodule 7 separieren. Das separierte Funktionsmodul 7 kann nun von dem Nutzer an dem Aufnahmeplatz 9 angebracht werden. Durch das Anbringen des Funktionsmoduls 7 an dem Aufnahmeplatz 9 wird das Funktionsmodul 7 mit der Bordelektronik des Kraftfahrzeugs 1 elektrisch verbunden. Die bestimmungsgemäße Funktion des Funktionsmoduls 7 steht dem Nutzer nun zur Verfügung. So kann nun insbesondere mit dem Funktionsmodul 7 auf das Kraftfahrzeug 1 zugegriffen werden und/oder durch das Kraftfahrzeug 1 kann auf das Funktionsmodul 7 zugegriffen werden. Es kann somit zum einen eine Unterstützung für das Funktionsmodul 7 durch das Kraftfahrzeug 1 erfolgen, so kann beispielsweise der Akku als das Funktionsmodul 7 geladen werden. Zum anderen kann das Kraftfahrzeug 1 durch das Funktionsmodul 7 bezüglich seiner Funktionalität erweitert werden. So kann das Kraftfahrzeug 1 beispielsweise mit der Kamera und/oder dem Speichermodul und/oder dem Bildschirm und/oder dem Kommunikationsmodul bzw. Funkmodul ausgestattet werden bzw. aufgerüstet werden.

Das Funktionsmodul 7 wird an dem Aufnahmeplatz 9 reversibel angebracht und kann somit jederzeit, beispielsweise auch während dem Betrieb des Kraftfahrzeugs 1, von dem Aufnahmeplatz 9 separiert bzw. entfernt werden. Der Nutzer kann das Funktionsmodul 7 nun beispielsweise wieder an das Kommunikationsendgerät 6 anordnen. Durch das Separieren des Funktionsmoduls 7 von dem Aufnahmeplatz 9 und somit von dem Kraftfahrzeug 1 kann das Funktionsmodul 7 auch bei Verlassen des Kraftfahrzeugs 1 mit aus dem Kraftfahrzeug 1 genommen werden. So kann beispielsweise ein erhöhter Diebstahlschutz des Funktionsmoduls 7 bereitgestellt werden.

Weiterhin hat der Nutzer des Kraftfahrzeugs 1 die Möglichkeit, das Kraftfahrzeug 1 mit den Funktionsmodulen 7 vielfältig aufzurüsten bzw. nachzurüsten. So kann beispielsweise ein größerer Bildschirm als das Funktionsmodul 7 an dem Aufnahmeplatz 9 angeordnet werden, welcher beispielsweise einen kleineren Bildschirm ersetzt. Beispielsweise kann durch den Speicher als Funktionsmodul 7 auch mehr Speicherplatz für beispielsweise eine Musikdatenbank des Kraftfahrzeugs 1 bereitgestellt werden.

Die Größe der Aufnahmeplätze 9 kann unterschiedlich vorliegen. So kann beispielsweise für den Bildschirm als das Funktionsmodul 7 ein größerer Aufnahmeplatz 9 bereitgestellt werden als für den Speicher als das Funktionsmodul 7. Auch die Anordnung der Aufnahmeplätze 9 ist vielfältig möglich. So können die Aufnahmeplätze 9 beispielsweise an unterschiedlichen Stellen in dem Innenraum 3 des Kraftfahrzeugs 1 angeordnet sein. Die Stellen sind vorzugsweise so in dem Innenraum 3 des Kraftfahrzeugs 1 angeordnet, dass die bestimmungsgemäße Funktion des Funktionsmoduls 7 effektiv ausgeführt werden kann. So ist es vorzugsweise vorgesehen, dass die Kamera als das Funktionsmodul 7 ein Gesicht des Nutzers bzw. eines Fahrzeuginsassen des Kraftfahrzeugs 1 erfassen kann. Mit anderen Worten, kann die Aufnahmeeinheit 2 durch das Vorhandensein der Aufnahmeplätze 9 an verschiedenen Stellen in dem Innenraum 3 verteilt vorliegen.

Das Funktionsmodul 7 wird in dem Aufnahmeplatz 9 vorzugsweise mit einer magnetischen Halterung angebracht. Durch die magnetische Halterung kann das Funktionsmodul 7 zerstörungsfrei von dem Aufnahmeplatz 9 separiert werden.

Der Aufnahmeplatz 9 umfasst Kontaktierungselemente 11. Durch die Kontaktierungselemente 11 kann eine elektrische Verbindung des Funktionsmoduls 7 mit der Bordelektronik des Kraftfahrzeugs 1 gewährleistet werden. Die Kontaktierungselemente 11 und/oder die Größe des Aufnahmeplatzes 9 ist vorzugsweise entsprechend einer Größe und/oder einer Position von Kontaktierungselementen des Kommunikationsendgeräts 6 angepasst.

In einem nicht weiter dargestellten Ausführungsbeispiel wird die Aufnahmeeinheit 2 und somit der jeweilige Aufnahmeplatz 9 gegebenenfalls von einer Abdeckung der Aufnahmeeinheit 2 verdeckt.

## Patentansprüche

1. Kraftfahrzeug (1) mit einer Bordelektronik und einer mit der Bordelektronik elektrisch verbundenen fahrzeuginternen elektronischen Aufnahmeeinheit (2) für ein tragbares Kommunikationsendgerät (6) und das tragbare Kommunikationsgerät (6) mit einem separierbaren und wieder anbringbaren Funktionsmodul (7),
**dadurch gekennzeichnet, dass**
die Aufnahmeeinheit (2) mehrere separate Aufnahmeplätze (9) aufweist, welche zur individuellen Aufnahme eines reversibel von dem Kommunikationsendgerät (6) separierbaren und wieder anbringbaren Funktionsmoduls (7) im von dem Kommunikationsendgerät (6) separierten Zustand ausgebildet sind, und zur elektronischen Kopplung des separierten Funktionsmoduls (7) mit der Bordelektronik zur Durchführung der bestimmungsgemäßen Funktion des Funktionsmoduls (7) ausgebildet ist, sodass die Aufnahmeeinheit (2) zum Aufnehmen verschiedener separierter Funktionsmodule (7) des Kommunikationsendgeräts (6) in den Aufnahmeplätzen (9) ausgebildet ist, wobei die Funktionsmodule (7) jeweils für sich eigene gegenständliche Einheiten sind, die am Kommunikationsendgerät (6) angebracht oder abgenommen werden können und in anderer Kombination mit anderen Funktionsmodulen (7) zu einer alternativen Ausgestaltung des Kommunikationsendgerätes (6) zerstörungsfrei reversibel wieder zusammenfügbar sind.

2. Kraftfahrzeug (1) und Kommunikationsgerät (6) nach Anspruch 1,
**dadurch gekennzeichnet, dass**
mehrere Aufnahmeplätze (9) der Aufnahmeeinheit (2) an unterschiedlichen und an beabstandeten Stellen in einem Innenraum des Kraftfahrzeugs (1) angeordnet sind.

3. Kraftfahrzeug (1) und Kommunikationsgerät (6) nach einem der vorhergehenden Ansprüche,
**dadurch gekennzeichnet, dass**
das Funktionsmodul (7) mit einer Mensch-Maschine-Schnittstelle des Kraftfahrzeugs (1) bedienbar ist, sodass das Kraftfahrzeug (1) durch die Aufnahmeeinheit (2) mit den mehreren separaten Aufnahmeplätzen (9) hinsichtlich bestimmter Funktionen, welche von dem Funktionsmodul (7) bereitgestellt werden, aufrüstbar ist.

4. Kraftfahrzeug (1) und Kommunikationsgerät (6) nach einem der vorhergehenden Ansprüche,
**dadurch gekennzeichnet, dass**
die Funktionsmodule (7) als Module eines bezüglich der Funktionsmodule (7) modulartig aufgebauten und als Mobilfunkendgerät ausgebildeten Kommunikationsendgeräts (6) ausgebildet sind.

5. Kraftfahrzeug (1) und Kommunikationsgerät (6) nach einem der vorhergehenden Ansprüche,
**dadurch gekennzeichnet, dass**
der Aufnahmeplatz (9) zumindest einen Magneten umfasst, durch welchen das Funktionsmodul (7) reversibel an dem Aufnahmeplatz (9) anbringbar ist.

6. Kraftfahrzeug (1) und Kommunikationsgerät (6) nach einem der vorhergehenden Ansprüche,
**dadurch gekennzeichnet, dass**
die Aufnahmeeinheit (2) eine Abdeckung umfasst, welche dazu ausgebildet ist, die Aufnahmeeinheit (2) zu einem Innenraum (3) des Kraftfahrzeugs (1) hingerichtet sichtgeschützt abzudecken.

7. Kraftfahrzeug (1) und Kommunikationsgerät (6) nach einem der vorhergehenden Ansprüche,
**dadurch gekennzeichnet, dass**
die Aufnahmeeinheit (2) als ein Endoskelett ausgebildet ist und eine Auswerteeinheit umfasst, welche für eine Nutzung durch das angebrachte Funktionsmodul (7) ausgelegt ist.

8. Verfahren zum Bereitstellen von Information in einem Kraftfahrzeug (1) mit einer Bordelektronik, wobei von dem Kraftfahrzeug (1) eine mit der Bordelektronik elektrisch verbundene fahrzeuginterne elektronische Aufnahmeeinheit (2) für ein tragbares Kommunikationsendgerät (6) umfasst wird,
**dadurch gekennzeichnet, dass**
ein Funktionsmodul (7) eines Kommunikationsendgeräts (6) von dem Kommunikationsendgerät (6) zerstörungsfrei separiert wird und an einen separaten Aufnahmeplatz (9) der Aufnahmeeinheit (2) angeordnet wird, und das Funktionsmodul (7) in dem in dem Aufnahmeplatz (9) aufgenommenen Zustand mit der Bordelektronik zur Durchführung der bestimmungsgemäßen Funktion des Funktionsmoduls (7) elektrisch gekoppelt wird, wobei die Aufnahmeeinheit (2) mehrere separate Aufnahmeplätze (9) aufweist, und verschiedene separierte Funktionsmodule (7) des Kommunikationsendgeräts (6) in den Aufnahmeplätzen (9) aufnimmt und wobei die Funktionsmodule (7) jeweils für sich eigene gegenständliche Einheiten sind, die am Kommunikationsendgerät (6) angebracht oder abgenommen werden können und in anderer Kombination mit anderen Funktionsmodulen (7) zu einer alternativen Ausgestaltung des Kommunikationsendgerätes (6) zerstörungsfrei reversibel wieder zusammenfügbar sind.

## Claims

1. Motor vehicle (1) with on-board electronics and an in-vehicle electronic mounting unit (2) connected electrically to the on-board electronics for a portable communication terminal (6) and the portable communication device (6) with a separable and reattachable function module (7),
**characterised in that**
the mounting unit (2) has multiple separate mounting spaces (9), which are configured for individual mounting of a function module (7), which can be separated in a reversible manner from the communication terminal (6) and reattached thereto, in the state separated from the communication terminal (6), and is configured to electronically couple the separated function module (7) with the on-board electronics to carry out the intended function of the function module (7), such that the mounting unit (2) is configured to receive various separated function modules (7) of the communication terminal (6) in the mounting spaces (9), wherein the function modules (7) are each per se distinct substantive units, which can be attached to or removed from the communication terminal (6) and in another combination can be reversibly recombined non-destructively with other function modules (7) into an alternative embodiment of the communication terminal (6).

2. Motor vehicle (1) and communication device (6) according to claim 1,
**characterised in that**
multiple mounting spaces (9) of the mounting unit (2) are arranged at different and at spaced-apart locations in an interior of the motor vehicle (1).

3. Motor vehicle (1) and communication device (6) according to any one of the preceding claims,
**characterised in that**
the function module (7) is operable with a human-machine interface of the motor vehicle (1), such that the motor vehicle (1) can be upgraded through the mounting unit (2) with the multiple separate mounting spaces (9) with regard to certain functions provided by the function module (7).

4. Motor vehicle (1) and communication device (6) according to any one of the preceding claims,
**characterised in that**
the function modules (7) are configured as modules of a communication terminal (6) built up in a modular manner with regard to the function modules (7) and configured as mobile terminal.

5. Motor vehicle (1) and communication device (6) according to any one of the preceding claims,
**characterised in that**
the mounting space (9) comprises at least one magnet, by means of which the function module (7) is reversibly attachable to the mounting space (9).

6. Motor vehicle (1) and communication device (6) according to any one of the preceding claims,
**characterised in that**
the mounting unit (2) comprises a cover configured to cover the mounting unit (2) towards an interior (3) of the motor vehicle (1) in a visually protected manner.

7. Motor vehicle (1) and communication device (6) according to any one of the preceding claims,
**characterised in that**
the mounting unit (2) is designed as an endoskeleton and comprises an evaluation unit designed for use by the attached function module (7).

8. Method for the provision of information in a motor vehicle (1) with on-board electronics, wherein an in-vehicle electronic mounting unit (2) connected electrically to the on-board electronics for a portable communication terminal (6) is comprised in the motor vehicle (1),
**characterised in that**
a function module (7) of a communication terminal (6) is separated non-destructively from the communication terminal (6) and is arranged on a separate mounting space (9) of the mounting unit (2), and the function module (7) in the state mounted in the mounting space (9) is electrically coupled with the on-board electronics to carry out the intended function of the function module (7), wherein the mounting unit (2) has multiple separate mounting spaces (9), and receives various separated function modules (7) of the communication terminal (6) in the mounting spaces (9) and wherein the function modules (7) are each per se distinct substantive units, which can be attached to or removed from the communication terminal (6) and in another combination can be reversibly recombined non-destructively with other function modules (7) into an alternative embodiment of the communication terminal (6).

## Revendications

1. Véhicule automobile (1) avec une électronique embarquée et une unité de logement (2) électronique à l'intérieur du véhicule reliée électriquement à l'électronique embarquée pour un terminal de communication (6) portable et l'appareil de communication (6) portable avec un module fonctionnel (7) séparable et pouvant à nouveau être monté,
**caractérisé en ce que**
l'unité de logement (2) présente plusieurs emplacements de logement (9) séparés, lesquels sont réalisés pour le logement individuel d'un module fonctionnel (7) séparable de manière réversible du terminal de communication (6) et pouvant à nouveau être monté à l'état séparé du terminal de communication (6), et est réalisée pour le couplage électronique du module fonctionnel (7) séparé avec l'électronique embarquée pour la réalisation de la fonction conforme à l'affectation du module fonctionnel (7), de sorte que l'unité de logement (2) est réalisée pour le logement de différents modules fonctionnels (7) séparés du terminal de communication (6) dans les emplacements de logement (9), dans lequel les modules fonctionnels (7) sont chacun pour soi des unités figuratives propres, qui peuvent être montées ou retirées au niveau du terminal de communication (6) et peuvent à nouveau être assemblées de manière réversible sans destruction dans une autre combinaison avec d'autres modules fonctionnels (7) pour un autre mode de réalisation du terminal de communication (6).

2. Véhicule automobile (1) et appareil de communication (6) selon la revendication 1,
**caractérisés en ce que**
plusieurs emplacements de logement (9) de l'unité de logement (2) sont agencés à des différents endroits espacés dans un habitacle du véhicule automobile (1).

3. Véhicule automobile (1) et appareil de communication (6) selon l'une quelconque des revendications précédentes,
**caractérisés en ce que**
le module fonctionnel (7) peut être commandé avec une interface homme-machine du véhicule automobile (1), de sorte que le véhicule automobile (1) peut être rééquipé par l'unité de logement (2) avec les plusieurs emplacements de logement (9) séparés en ce qui concerne des fonctions déterminées, qui sont mises à disposition par le module fonctionnel (7).

4. Véhicule automobile (1) et appareil de communication (6) selon l'une quelconque des revendications précédentes,
**caractérisés en ce que**
les modules fonctionnels (7) sont réalisés en tant que modules d'un terminal de communication (6) à structure modulaire par rapport aux modules fonctionnels (7) et réalisé en tant que terminal radio mobile.

5. Véhicule automobile (1) et appareil de communication (6) selon l'une quelconque des revendications précédentes,
**caractérisés en ce que**
l'emplacement de réception (9) comprend au moins un aimant, par lequel le module fonctionnel (7) peut être monté de manière réversible au niveau de l'emplacement de logement (9).

6. Véhicule automobile (1) et appareil de communication (6) selon l'une quelconque des revendications précédentes,
**caractérisés en ce que**
l'unité de logement (2) comprend un recouvrement, qui est réalisé pour recouvrir l'unité de logement (2) à l'abri des regards dirigée vers un habitacle (3) du véhicule automobile (1).

7. Véhicule automobile (1) et appareil de communication (6) selon l'une quelconque des revendications précédentes,
**caractérisés en ce que**
l'unité de logement (2) est réalisée en tant qu'endosquelette et comprend une unité d'évaluation, qui est conçue pour une utilisation par le module fonctionnel (7) monté.

8. Procédé de mise à disposition d'information dans un véhicule automobile (1) avec une électronique embarquée, dans lequel une unité de logement (2) électronique à l'intérieur du véhicule reliée électriquement à l'électronique embarquée pour un terminal de communication (6) portable est comprise par le véhicule automobile (1),
**caractérisé en ce que**
un module fonctionnel (7) d'un terminal de communication (6) est séparé sans destruction du terminal de communication (6) et est agencé au niveau d'un emplacement de logement (9) séparé de l'unité de logement (2), et le module fonctionnel (7) est couplé électriquement à l'état reçu dans l'emplacement de logement (9) avec l'électronique embarquée pour la réalisation de la fonction conforme à l'affectation du module fonctionnel (7), dans lequel l'unité de logement (2) présente plusieurs emplacements de logement (9) séparés, et reçoit différents modules fonctionnels (7) séparés du terminal de communication (6) dans les emplacements de logement (9), et dans lequel les modules fonctionnels (7) sont chacun pour soi des unités figuratives propres, qui peuvent être montées ou retirées au niveau du terminal de communication (6) et peuvent à nouveau être assemblées de manière réversible sans destruction dans une autre combinaison avec d'autres modules fonctionnels (7) pour un autre mode de réalisation du terminal de communication (6).
